# EUROPEAN PATENT APPLICATION

(11) **EP 1 715 408 A2**
(43) Date of publication of application: **25.10.2006**
(21) Application number: 06251755.2
(22) Date of filing: 30.03.2006
(51) Int. Cl.: G06F 3/048, H04N 5/445

(54) **Simple item selecting method and electronic apparatus provided therewith**

(30) Priority: 22.04.2005 JP 2005124878
(71) Applicant: ORION ELECTRIC CO., Ltd., Fukui 915-8555 (JP)
(72) Inventor: Imadate, Hiroyuki, Echizen-city Fuki 915-8555 (JP)
(74) Representative: Paget, Hugh Charles Edward

(57) **Abstract**

To provide an electronic apparatus which allows a user to select a desired setting item easily on a menu screen for making settings of the electronic apparatus. A plurality of setting items of the electronic apparatus are divided based on predetermined classification and a plurality of icons 15 illustrating the classification are displayed. To improve viewability of the icons 15, icon frames 16 are used as backgrounds of the icons 15, and when the user selects an icon, a cursor 17 is used which explicitly specifies the icon being selected 15 and icon frame 16 by displaying them in a changed background color. Using these three components of the icons 15, icon frames 16 and cursor 17, the user can select a desired icon easily from among the icons 15 indicating the classification of many setting items of the electronic apparatus.

## Description

### BACKGROUND OF THE INVENTION

### Field of the Invention

The present invention relates to a simple item selecting method and an electronic apparatus provided therewith in a setting change function using a menu screen included in a display device for television or the like, a recording and reproducing device using a recording medium such as DVD (Digital Versatile Disk), HDD (Hard Disk Drive) and video tape or a hybrid machine of the display device and recording and reproducing device.

### Description of the Related Art

Conventionally, various electronic apparatuses are provided with operation means and display means for changing functions and various settings such as adjustments of the electronic apparatuses prepares and have the function of displaying setting items on the display means, changing settings by the operation means and changing the operations of the electronic apparatuses to allow users to use them easily. As for the method of selecting such setting items, various methods are conventionally disclosed.

For example, Japanese Patent Laid-Open Publication No. 2002-207562 (Patent Document 1) discloses a menu screen of a method of displaying, when the operation means is judged to be operated for a predetermined time, information associated with an icon at which a cursor is positioned together with the above described icon, erasing the information when the operation of the operation means is canceled while the information associated with the icon is being displayed and restoring the original state. That is, when a cursor indicating an icon being selected out of a group of icons appearing on the display means is displayed and if, for example, a button of the operation means is pressed continuously, the icon group is erased, information associated with the icon being selected is displayed by the cursor and it is possible to erase the information by releasing the button and redisplay the icon group.

Furthermore, Japanese Patent Laid-Open Publication No. 2003-76460 (Patent Document 2) discloses a menu screen of a method of arranging icons in an arc form, moving an icon selected by a user to the center of the arc or the periphery, erasing icons on the arc other than the selected icon and displaying sub icons which are subordinate to the selected icon on the arc. That is, a first group of icons are arranged in an arc form on the display means, the cursor indicating the selected icon is displayed and when a confirmation operation is performed by the operation means on the icon being selected by the cursor, icons other than the icon being selected are erased and a second group of icons indicating setting information or the like associated with the icon being selected are displayed as a concentric circle of the arc on which the first group of icons are displayed.

However, when many setting items which tend to increase as the complexity of setting of the apparatus increases and a plurality of icons which classify them are displayed on a conventional menu screen on the arc, there are such disadvantages that viewability degrades and the operation also becomes more complicated and so on. Furthermore, the menu screen composed of a plurality of layers through predetermined classification of setting items has a disadvantage that when, for example, a desired class is selected and a setting item subordinate to the class is displayed, if the selected class disappears from the screen, the user cannot know the setting item of which class he or she is operating.

### SUMMARY OF THE INVENTION

The present invention has been implemented in view of the above described problem and it is an object of the present invention to provide a simple item selecting method and an electronic apparatus provided therewith capable of improving viewability during a setting and simply and speedily selecting a desired setting item.

The present invention comprises an electronic apparatus provided with display means for displaying a video and audio or video/audio signal output means for outputting a video/audio signal to an external display apparatus, a plurality of icons defined in graphics in accordance with classification of various setting items when various settings of the electronic apparatus are made on a screen; and a cursor for selecting a desired icon from among the plurality of icons, wherein when the cursor is moved from the icon to an icon indicating a desired setting item by operation means to perform a confirmation operation, the screen is switched to a setting change screen on which predetermined setting items associated with the icon are displayed in a list in conjunction with the confirmation operation of the icon.

According to the construction of a first aspect of the present invention, a plurality of setting items of the electronic apparatus are classified according to their contents, icons illustrating functions corresponding to the classification are provided and the icons are output to display means such as a monitor, and therefore it is possible to appeal to vision of the user about to what kind of function the set of setting items by the classification corresponds. Furthermore, the icon frames forming the backgrounds of the icons can keep viewability of graphics of the icons in a good condition. Furthermore, the cursor is explicitly shown to make the icon being selected easily distinguishable from among the plurality of icons. Performing a confirmation operation on the icon being selected by the operation means causes the screen to change to a setting change screen which displays a plurality of setting items indicated by the icon.

The simple item selecting method according to a second aspect is the simple item selecting method according to aspect 1, further comprising icon frames which constitute backgrounds of the icons, wherein when the cursor is moved on the icon by the operation means, the background color of the icon being selected is changed.

According to the construction of the second aspect of the present invention, the cursor for selecting the desired icon changes the background colors of the icon being selected and the icon frame, which can improve viewability of the icon being selected.

The simple item selecting method according to a third aspect is the simple item selecting method according to aspect 1 or 2, wherein the predetermined setting items associated with the icon are displayed on the setting change screen and when a desired setting item is selected and a confirmation operation is performed, setting items other than the desired setting item are hidden and the other setting items are redisplayed in conjunction with a confirmation operation of the completion of the setting of the corresponding setting item.

According to the construction of the third aspect of the present invention, when a desired setting item is selected from an enumeration of a plurality of settings items and a confirmation operation for the setting is performed, only the desired setting item remains and setting items other than the desired setting item are hidden. This allows the user to know clearly about which setting item he/she is currently operating. Furthermore, when the setting is completed and a confirmation operation is performed on the set value, it is possible to redisplay the hidden setting items and continue to set other items.

The electronic apparatus comprising the simple item selecting method according to a fourth aspect of the present invention is an electronic apparatus comprising the simple item selecting method according to any one of aspects 1 to 3 as a menu screen item selecting method.

According to the construction of the fourth aspect of the present invention, the electronic apparatus comprising the setting menu screen for selecting a setting item using the simple item selecting method according to any one of aspects 1 to 3 allows the user to easily change the setting of the electronic apparatus.

### BRIEF DESCRIPTION OF THE DRAWINGS

FIG. 1 is a block diagram showing the configuration of an electronic apparatus according to an embodiment of the present invention.
FIG. 2 is a flow chart showing the operation of a menu screen according to the embodiment of the present invention.
FIG. 3 is a plan view showing icons displayed on the menu screen according to the embodiment of the present invention.
FIG. 4 (a) is a plan view showing a screen of a list of setting items classified with a selected icon and FIG. 4 (b) is a plan view showing a setting adjustment screen when one of the setting items displayed in FIG. 4(a) is selected.

### DETAILED DESCRIPTION OF THE PREFERRED EMBODIMENTS

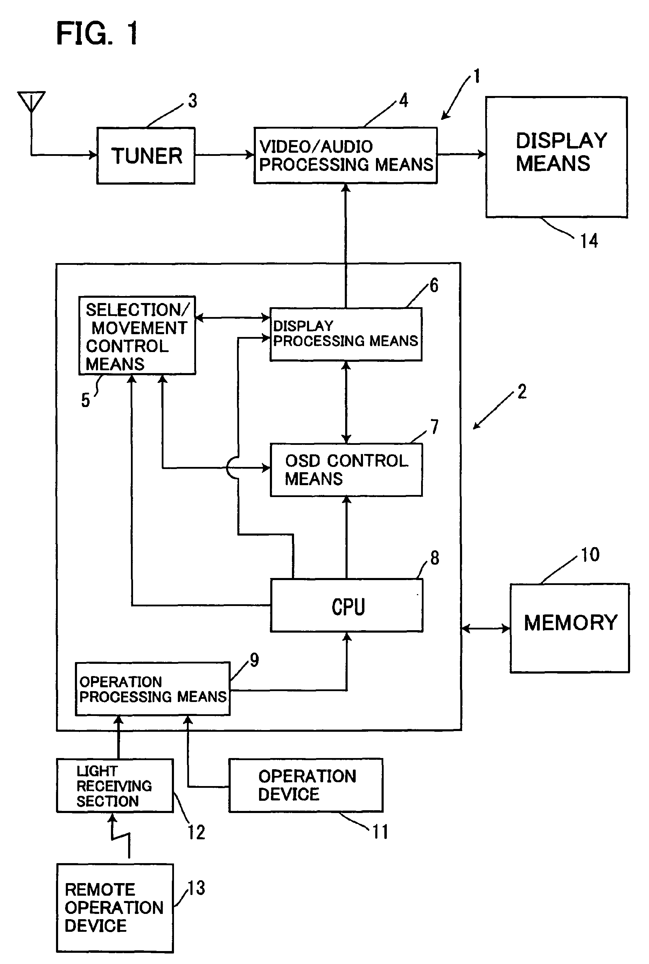

Hereinafter, as the best mode for implementing the present invention, an embodiment will be explained with reference to FIG. 1 to FIG. 4. It goes without saying that the present invention is also easily applicable to modes other than that explained in the embodiment within a range not departing from the essence of the present invention.

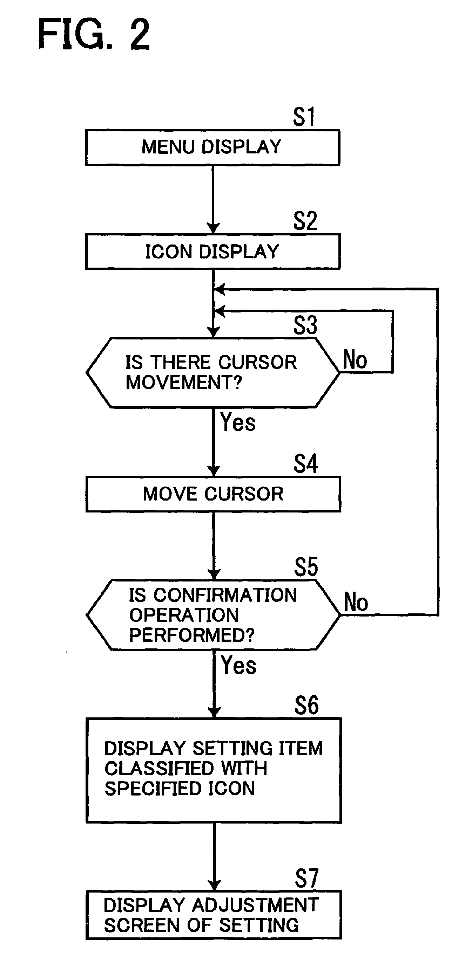

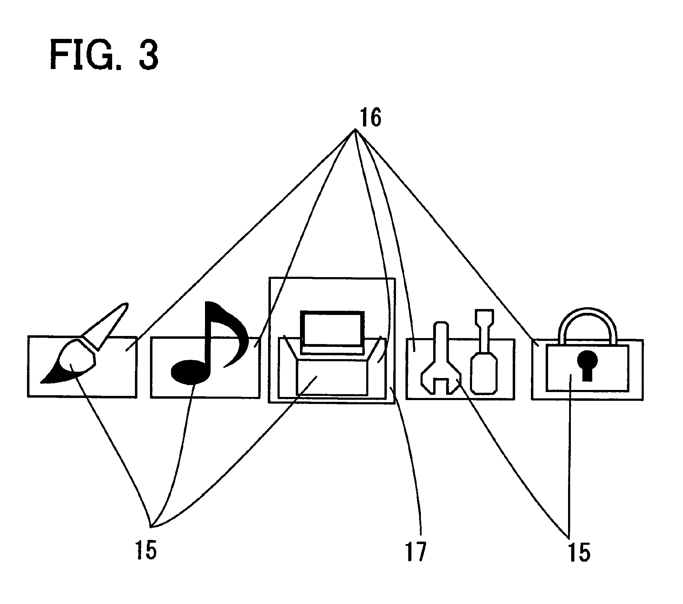

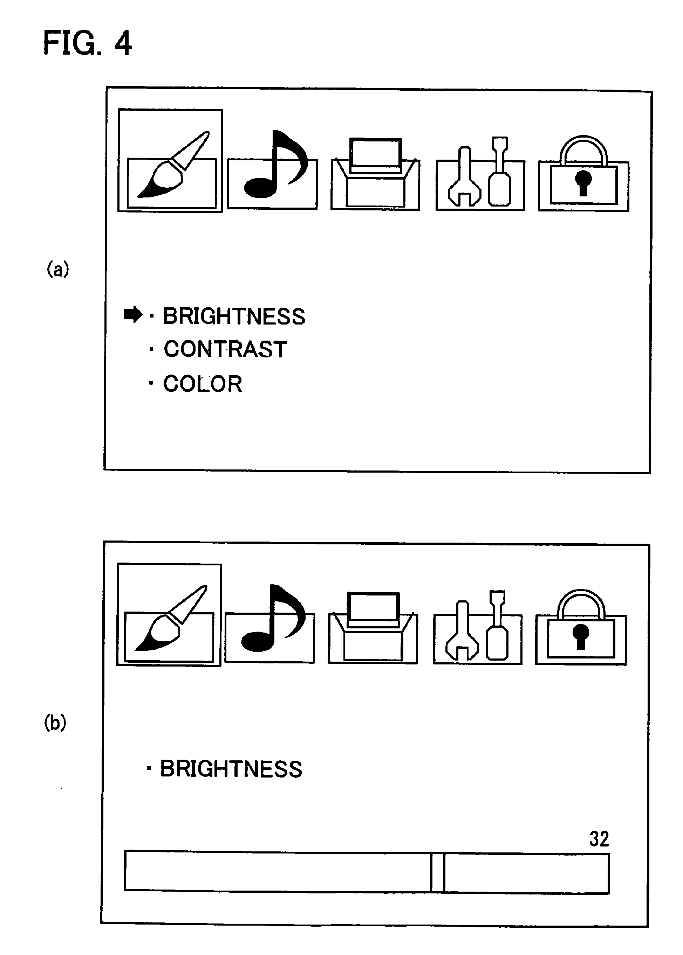

FIG. 1 to FIG. 4 show an embodiment of the present invention; FIG. 1 is a block diagram showing the configuration of this embodiment and FIG. 2 is the flow chart showing operations from a menu screen display to a setting screen display. FIG. 3 is an icon configuration diagram on the menu screen and FIG. 4 illustrates a setting screen.

The configuration of the embodiment of the present invention will be explained using FIG. 1. Reference numeral 1 denotes an electronic apparatus such as a television receiver and 2 denotes a microcontroller which is installed inside the electronic apparatus 1. Reference numeral 3 denotes a tuner which extracts a television signal from a carrier received through an antenna and 4 denotes video/audio processing means for converting the television signal into video and audio signals. Reference numeral 5 denotes selection/movement control means for controlling the movement of a cursor and an item selection operation. Reference numeral 6 denotes a display processing section which sends display information on a menu screen or the like to the video/audio processing means. Reference numeral 7 denotes OSD control means for performing processing such as generation of an OSD and synthesis with a video signal or the like. Reference numeral 8 denotes a CPU which controls each and all operations of the overall microcontroller. Reference numeral 9 is operation processing means, which processes an operation signal transmitted from an operation device 11 and remote operation device 13 which are operation means to a light receiving section 12. Reference numeral 10 is a nonvolatile memory which stores data such as various types of setting initial values and adjustment items of the microcontroller.

Next, icon and cursor operations when changing settings of the electronic apparatus 1 from a menu screen will be explained using a flow chart in FIG. 2. First, the user instructs the electronic apparatus 1 to display the menu screen for changing the settings (S1). An icon indicating the classification of setting items is displayed (S2). Next, when key input information from a switch provided for the electronic apparatus 1 or a remote controller of the remote operation device 13 is detected, the cursor movement operation is judged (S3) and when a movement operation is performed, the cursor is moved (S4). Then, it is judged whether or not the user has moved the cursor to the icon indicating the classification of a desired setting and whether or not the user has performed a confirmation operation (S5), and if the confirmation operation is performed, the setting item which has been classified for the icon is displayed (S6). Then, an adjustment screen for the displayed setting item is displayed (S7).

Next, the configuration of the icons on the menu screen will be explained using FIG. 3. Reference numeral 15 denotes icons which classify a plurality of setting items and illustrates the classification and 16 denotes icon frames to improve viewability of the icons 15. Reference numeral 17 denotes a cursor, which is displayed as a background of the icon 15 and icon frame 16 and which specifies an icon being selected. When a confirmation operation is performed on the icon 15 being selected using the cursor 17, a list of setting items as shown in FIG. 4(a) is displayed.

Next, screen transition when a setting is adjusted will be explained using FIGS. 4 (a) and (b). As shown in FIG. 4(a), when a confirmation operation is performed on the above described icon being selected by the operation means, a setting item list classified with the icon is displayed. Using the operation means, the user selects a desired setting item (the setting of "brightness" is changed in FIG. 4 (a)) from the setting item list. Next, when the confirmation operation is performed, items other than the selected desired setting item are hidden and only the desired setting item is displayed as shown in FIG. 4(b). Moreover, a slide bar for numerical adjustment or the like is displayed and the user changes the desired setting item using it. Next, when the setting is completed and a confirmation operation is performed, the screen returns to the state in FIG. 4(a).

As shown above, according to this embodiment, by classifying many setting items on a menu screen which is displayed when a setting of the electronic apparatus 1 is changed and displaying the classification with the icon 15 illustrating the classification, it is possible to simplify the menu screen and by enclosing the icon 15 with the icon frame 16, it is possible to secure viewability of the icon 15 even when the icon 15 is displayed superimposed, and by displaying the cursor 17 as the background of the icon 15 and icon frame 16, it is possible to easily distinguish the icon 15 being selected. Furthermore, performing a confirmation operation on the icon 15 makes it possible to display a list of setting items of the classification indicated by the icon and thereby easily select a desired setting item through the operation means without performing any complicated operations. Moreover, when adjusting a selected setting item, by hiding other setting items, it is possible to prevent the user from misunderstanding an item currently being set.

The embodiment of the present invention has been explained in detail so far, but the present invention is not limited to the above described embodiment and can be modified in various ways within a range not departing from the essence of the present invention. For example, a television receiver is assumed as the electronic apparatus 1, but the electronic apparatus 1 may be a DVD or HDD recorder which outputs a video/audio signal to the outside or a recording and reproducing device such as a hybrid machine of a television receiver and DVD or HDD recorder.

The effects of the present invention are as follows.

The simple item selecting method according to a first aspect classifies a plurality of setting items into certain classes, displays the classification using graphics and thereby allows the user to easily distinguish into which icon the item to be set is classified. Furthermore, when, for example, a setting screen is displayed as superimposition, the icon frames constituting the icon backgrounds prevent viewability of the icons from being degraded due to background images. Furthermore, the use of the cursor to select an icon allows the user to easily distinguish which icon is currently being selected. When the cursor is put on an icon of desired classification and a confirmation operation is performed using the operation means, an enumeration of setting items of the classification indicated by the icon is displayed. In this way, the user can easily distinguish the classification of a desired setting item using graphics of icons and easily select the icon indicating the desired classification using the cursor.

The simple item selecting method according to a second aspect changes the background color of the icon selected by the cursor which is moved by the user' s operation and allows the user to easily distinguish which icon is the icon being selected.

The simple item selecting method according to a third aspect enumerates a plurality of classified setting items, selects a desired setting item by the operation means and hides, upon a confirmation operation, setting items other than the desired setting item. This allows the user to make settings without misunderstanding about what item is being set. Furthermore, when a confirmation operation is performed after the setting is completed, setting items other than the desired setting item, which have been hidden, are redisplayed. This allows the user to continue to make settings on other setting items under the same classification.

The electronic apparatus comprising a simple item selecting method according to a fourth aspect is an electronic apparatus comprising a menu screen having the simple item selecting method according to any one of aspects 1 to 3 and allows the user to easily select a desired setting item from among many setting items of the electronic apparatus and adjust set values.

## Claims

1. A simple item selecting method comprising:
an electronic apparatus provided with display means for displaying a video and audio or video/audio signal output means for outputting a video/audio signal to an external display apparatus;
a plurality of icons defined in graphics in accordance with classification of various setting items when various settings of the electronic apparatus are made on a screen; and
a cursor for selecting a desired icon from among the plurality of icons,
wherein when the cursor is moved from the icon to an icon indicating a desired setting item by operation means to perform a confirmation operation, the screen is switched to a setting change screen on which predetermined setting items associated with the icon are displayed in a list in conjunction with the confirmation operation of the icon.

2. The simple item selecting method according to claim 1, further comprising icon frames which constitute backgrounds of the icons, wherein when the cursor is moved on the icon by the operation means, the background color of the icon being selected is changed.

3. The simple item selecting method according to claim 1 or 2, wherein the predetermined setting items associated with the icon are displayed on the setting change screen and when a desired setting item is selected and a confirmation operation is performed, setting items other than the desired setting item are hidden and the other setting items are redisplayed in conjunction with a confirmation operation of the completion of the setting of the corresponding setting item.

4. An electronic apparatus comprising the simple item selecting method according to any one of claims 1 to 3 as a menu screen item selecting method.
